# EUROPÄISCHE PATENTANMELDUNG

(11) **EP 2 256 094 A1**
(43) Veröffentlichungstag der Anmeldung: **01.12.2010**
(21) Anmeldenummer: 10164001.9
(22) Anmeldetag: 27.05.2010
(51) Int. Cl.: C03B 23/025, C03B 23/03, C03B 23/035, C03C 4/08

(54) **Verfahren zum Biegen und thermischen Vorspannen von Strahlenschutzglas**

(30) Priorität: 28.05.2009 DE 102009024234; 28.07.2009 DE 102009036164
(71) Anmelder: Schott AG, 55122 Mainz (DE)
(72) Erfinder: Schillert, Horst, 31073, Grünenplan (DE); Rößler, Dirk, 31073, Grünenplan (DE); Mevers, Detlef, 37632, Holzen (DE)
(74) Vertreter: Witte, Weller & Partner

(57) **Zusammenfassung**

Es wird ein Verfahren zum Biegen von Strahlenschutzglas angegeben, das einen Schwermetalloxidgehalt von mindestens 50 Gew.-% aufweist, wobei zunächst eine Form bereitgestellt wird, dann eine Glasplatte aus einem Strahlenschutzglas bereitgestellt wird, die Form auf eine Temperatur von 300 bis 400°C vorgeheizt wird, die Glasplatte auf die Form aufgelegt wird, die Glasplatte und die Form in einem Ofen auf eine Temperatur von 370 bis 430°C aufgeheizt wird, anschließend gemeinsam auf eine Temperatur von 400°C bis 500°C, vorzugsweise auf 440 bis 500°C aufgeheizt wird, wobei die Aufheizzeit insgesamt mindestens 30 Minuten, vorzugsweise mindestens 60 Minuten beträgt, anschließend die Glasplatte geformt wird und schließlich das geformte Glas mittels eines Kühlprogrammes über einen Zeitraum von mindestens 60 Minuten abgekühlt wird. Für ein thermisches Vorspannen wird der Glaskörper zumindest an seinem Außenumfang an einer Reihe von Auflagepunkten abgestützt, in einen vorgeheizten Ofen eingeführt, bis auf 400 bis 500°C aufgeheizt, anschließend entnommen und auf beiden Seiten mit kalter Luft aus einer Vielzahl von Düsen angeblasen, vorzugsweise bis eine Abkühlung auf etwa 100°C erfolgt ist (Fig. 1).

## Beschreibung

Die Erfindung betrifft ein Verfahren zum Biegen von Strahlenschutzglas und ein Verfahren zum thermischen Vorspannen eines Strahlenschutzglases bzw. eines daraus bestehenden Glaskörpers.

Im Rahmen dieser Anmeldung wird unter einem "Strahlenschutzglas" ein Glas verstanden, das den Anforderungen an Bleiglasscheiben gemäß der deutschen und europäischen Normen DIN EN 61331-1 (Fassung August 2006) und DIN EN 61331-2 (Fassung April 2002) genügt, d.h. der Schwächungsgleichwert in mm Pb darf nicht kleiner sein als das 0,22-fache der minimal erlaubten Bleiglasscheibe in Millimeter sein. Die obigen Normen beruhen auf der internationalen Norm IEC 61331-1:1994 und der IEC 61331-2:1994 und sind damit harmonisiert.

Solche Strahlenschutzgläser werden als Schutzgläser gegen Röntgen- und Gammastrahlen im medizinischem und technischem Bereich verwendet. Sie werden insbesondere in Strahlenschutztüren und -fenster eingebaut. Der Schwächungsgleichwert wird gemäß der Norm durch Vergleich zwischen der Strahlenschutzwirkung einer Bleiglasplatte und einer Platte aus Strahlenschutzglas ermittelt. Ein Schwächungsgleichwert von 0,22 bedeutet, dass das Strahlenschutzglas an seiner minimal zugelassenen Dicke noch 22 % der Schutzwirkung einer Bleiglasplatte gleicher Dicke hat.

Im engeren Sinne wird unter einem Strahlenschutzglas ein Glas verstanden, das gemäß der obigen Normen einen Schwächungsgleichwert von mindestens 25 %, vorzugsweise von mindestens 28 % für eine Nenndicke zwischen 6,5 und 25 mm bei einer Röhrenspannung von bis zu 200 kV mit 1,2 mm Cu Gesamtfilterung aufweist.

Es kann sich hierbei z.B. um ein Glas handeln, das einen Schwermetalloxidgehalt von mindestens 50 Gew.-% aufweist. Es kann sich hierbei etwa um ein Schwerflintglas handeln, das vorzugsweise einen Bleioxidgehalt von mindestens 60 Gew.-% aufweist.

Durch diesen hohen Schwermetalloxidgehalt weisen derartige Gläser eine hohe Dichte (mehr als 4000 kg/m³ oder sogar mehr als 4900 kg/m³) und eine relativ niedrige Transformationstemperatur (<500 °C) auf.

Solche Gläser weisen außerdem eine gegenüber herkömmlichen Kalknatrongläsern reduzierte mechanische und chemische Stabilität bzw. Festigkeit der Oberflächen auf.

Eine 2- oder 3-dimensionale Verformung derartiger Gläser und auch ein thermisches Vorspannen derartiger Gläser ist mit bekannten Biegeverfahren nicht möglich (vgl. zum Beispiel US 5,372,624).

Aus diesem Dokument sind eine Vorrichtung und ein Verfahren zum Biegen einer Glasplatte bekannt, wobei die Glasplatte in einer Biegezelle in einer oberen Biegeform senkrecht zu einer ringförmigen Gegenform gehalten wird, die ein Element zur Unterstützung des mittleren Teils der Glasplatte in der Biegezelle aufweist. Dabei wird die ringförmige Gegenform angehoben, um die Glasplatte gegen die obere Biegeform zu pressen. Die Biegetemperatur liegt hierbei bei etwa 650°C.

Ein Strahlenschutzglas lässt sich auf diese Weise nicht biegen. Vielmehr müssen besondere Maßnahmen getroffen werden, um dem besonders hohen Gewicht und der niedrigen Transformationstemperatur Rechnung zu tragen.

Der Erfindung liegt somit die Aufgabe zugrunde, ein Verfahren zum Biegen von Strahlenschutzglas anzugeben, mit dem eine zuverlässige Biegung des Glases in eine gewünschte 2-dimensionale oder 3-dimensionale Form mit hoher Qualität gewährleistet ist, ohne dass die Gefahr der Beschädigung des Glases besteht.

Ferner soll ein Verfahren zum thermischen Vorspannen eines derartigen Strahlenschutzglases angegeben werden.

Diese Aufgabe wird erfindungsgemäß durch ein Verfahren zum Biegen von Strahlenschutzglas mit den folgenden Schritten gelöst:
(a) Bereitstellen einer Form;
(b) Bereitstellen einer Glasplatte aus einem Strahlenschutzglas;
(c) Vorheizen der Form auf eine Temperatur von 300 bis 400°C;
(d) Auflegen der Glasplatte auf die Form;
(e) gemeinsames Aufheizen der Glasplatte und der Form auf eine Temperatur von 370 bis 430°C;
(f) Aufheizen auf eine Temperatur von 400°C bis 500°C, vorzugsweise auf eine Temperatur von 440 bis 500°C, wobei die Schritte (e) und (f) zusammen mindestens 30 Minuten, vorzugsweise mindestens 60 Minuten dauern;
(g) Formen der Glasplatte und
(h) Abkühlen des geformten Glases mittels eines Kühlprogrammes über einen Zeitraum von mindestens 60 Minuten, vorzugsweise über mindestens 120 Minuten.

Die Erfindung wird auf diese Weise vollkommen gelöst.

Es hat sich gezeigt, dass mit einem derartigen Temperaturprogramm eine Glasplatte aus einem Strahlenschutzglas mit hoher Präzision verformt werden kann.

Hierbei kann im einfachsten Fall die Glasplatte unter Schwerkrafteinfluss geformt werden.

Infolge des hohen Gewichtes der Glasplatte führt die Biegung unter Schwerkrafteinfluss zu deutlich besseren Ergebnissen als beim Formen von herkömmlichen Glasplatten.

Vorzugsweise erfolgt das Aufheizen, Formen und Kühlen bei dieser Verfahrensvariante innerhalb eines Ofens.

Gemäß einer weiteren Verfahrensvariante wird der Formvorgang durch Anlegen eines Vakuums unterstützt.

Auf diese Weise kann der Formvorgang selbst beschleunigt werden und eine noch höhere Präzision bei der Einhaltung der geometrischen Toleranzen des gebogenen bzw. geformten Strahlenschutzglases erreicht werden.

Gemäß einer weiteren Ausgestaltung der Erfindung wird die Glasplatte durch einen Stempel, der vorzugsweise aus einer Aluminiumlegierung oder einer Magnesiumlegierung besteht, in die Form gepresst.

Hierdurch kann der Formvorgang beschleunigt werden und außerdem eine besonders hohe Präzision bei der Einhaltung der geometrischen Parameter gewährleistet werden.

Vorzugsweise weist hierbei der Stempel an seiner Oberfläche eine Trennschicht auf, die vorzugsweise aus einem Glasseidegewebe besteht.

Hierdurch wird ein Anhaften am Stempel vermieden.

Vorzugsweise wird hierbei der Stempel auf eine Temperatur vorgeheizt, die mindestens 100 K unterhalb der Vorheiztemperatur der Form liegt, vorzugsweise 120 bis 180°C beträgt, weiter bevorzugt 140 bis 160°C beträgt.

Gemäß einer weiteren Ausgestaltung der Erfindung beträgt der Anpressdruck maximal 15 bar, vorzugsweise maximal 10 bar, weiter bevorzugt maximal 8 bar und wird allmählich aufgebaut.

Hierzu kann beispielsweise ein Pneumatikzylinder verwendet werden, der den Maximaldruck allmählich aufbaut.

Die Presszeit beträgt vorzugsweise 2 bis 30 Sekunden, weiter bevorzugt 3 bis 10 Sekunden, besonders bevorzugt 4 bis 6 Sekunden.

Bei Verwendung derartiger Pressbedingungen ergibt sich eine hohe Qualität und eine gute Einhaltung der geometrischen Toleranzen.

Vorzugsweise wird die Form mit der aufgelegten Glasplatte zunächst im Ofen vorgewärmt auf eine Temperatur von etwa 400 bis 450°C, dann zum Pressen aus dem Ofen herausgefahren und anschließend zur Durchführung des Kühlprogrammes wieder in den Ofen eingefahren.

Im Ofen erfolgt dann die gesteuerte Abkühlung mittels eines Kühlprogrammes über einen Zeitraum von mindestens 60 Minuten, vorzugsweise über mindestens 120 Minuten.

Hierbei wird vorzugsweise von einer Temperatur von unterhalb der unteren Kühltemperatur aus abkühlt, vorzugsweise beginnend mit einer Temperatur, die 30 bis 100 K unterhalb der unteren Kühltemperatur liegt, vorzugsweise beginnend bei 380 bis 420°C.

Unter Verwendung eines derartigen Kühlprogrammes lassen sich Spannungen im geformten Glaskörper sicher vermeiden.

Gemäß einer weiteren Ausgestaltung der Erfindung wird eine Form verwendet, die aus einem vergüteten martensitischen Stahl besteht, vorzugsweise mit einem C-Gehalt von 0,2 bis 0,6 Gew.-%, weiter bevorzugt mit einem C-Gehalt von 0,3 bis 0,5 Gew.-%, weiter bevorzugt aus einem Stahl mit einem Chromgehalt von 14 bis 19 Gew.-%, einem Molybdängehalt von 0,5 bis 2 Gew.-% und einem Nickelgehalt von 0 bis 2 Gew.-% besteht, besonders bevorzugt aus dem Stahl Nr. 1.4122 besteht.

Es hat sich gezeigt, dass die Verwendung eines derartigen vergüteten Stahls eine geringe Abnutzung und ein zunderfreies Arbeiten mit einer hohen Standfestigkeit ergibt.

In weiter bevorzugter Ausführung der Erfindung wird die Oberfläche der Form mit einem Trennmittel beschichtet. Hierbei kann es sich beispielsweise um Graphitpulver oder Bornitridpulver handeln.

Durch diese Maßnahme wird ein Kleben des Glaskörpers an der Form vermieden.

Erfindungsgemäß wird ferner ein Verfahren zum thermischen Vorspannen eines Glaskörpers aus einem Strahlenschutzglas offenbart, vorzugsweise nach einem Biegen in der vorstehend beschriebenen Weise, mit den folgenden Schritten:
- Abstützen des Glaskörpers zumindest an seinem Außenumfang an einer Reihe von Auflagepunkten;
- Einführen des Glaskörpers in einen Ofen, der auf eine Temperatur von 500 bis 600°C, vorzugsweise auf 530 bis 570°C vorgeheizt ist;
- Aufheizen des Glaskörpers auf 400°C bis 500°C, vorzugsweise auf 430 bis 470°C;
- Entnehmen des Glaskörpers aus dem Ofen und Anblasen des Glaskörpers auf beiden Seiten mit einem kalten Fluid aus einer Mehrzahl von Düsen, bis sich der Glaskörper auf eine Oberflächentemperatur von höchstens 150°C, vorzugsweise auf höchstens 120°C, besonders bevorzugt auf höchstens 100°C abgekühlt hat.

Es hat sich gezeigt, dass mit einer derartigen Verfahrensführung ein thermisches Vorspannen eines aus einem Strahlenschutzglas bestehenden Glaskörpers in zuverlässiger Weise möglich ist und sich eine deutliche Festigkeitserhöhung gegenüber einem nicht thermisch vorgespannten Glaskörper ergibt.

Gemäß einer weiteren Ausgestaltung der Erfindung wird der Glaskörper mit Blasluft angeblasen, die vorzugsweise annähernd Raumtemperatur aufweist oder die gekühlt ist.

Hierbei tritt das Fluid bzw. die Blasluft vorzugsweise mit einem Druck von 10 bis 20 Millibar in Richtung auf den Glaskörper aus.

Unter diesen Randbedingungen wird eine zuverlässige thermische Vorspannung des aus einem Strahlenschutzglas bestehenden Glaskörpers ermöglicht.

Der vorstehend beschriebene Biegevorgang und die vorstehend beschriebene thermische Vorspannung des Strahlenschutzglases eignet sich insbesondere für ein Strahlenschutzglas mit einem sehr hohen Schwermetalloxidanteil, das eine Dichte von mindestens 4000 kg/m³, vorzugsweise von mindestens 4900 kg/m³ aufweist.

Hierbei handelt es sich vorzugsweise um ein Schwerflintglas, das einen Bleioxidgehalt von mindestens 60 Gew.-% aufweist.

Ferner kann das Strahlenschutzglas vorzugsweise als Hauptbestandteile neben Bleioxid 25 bis 30 Gew.-% Siliciumoxid und 2 bis 6 Gew.-% Bariumoxid enthalten.

Ferner kann das Strahlenschutzglas zusätzlich 0,1 Gew.-% bis 3 Gew.-%, vorzugsweise 0,5 bis 2 Gew.-% mindestens eines weiteren Bestandteils enthalten, der aus der Gruppe ausgewählt ist, die aus Aluminiumoxid, Zirkonoxid und einem Alkalioxid besteht, und optional Läutermittel in üblichen Mengen von bis zu 2 Gew.- % enthalten.

Ferner kann das Strahlenschutzglas eine Dicke von 3,0 bis 25,0 mm aufweisen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine schematische Darstellung eines erfindungsgemäßen Glasbiegevor- gangs unter Ausnutzung von Schwerkraftsenken;
- Fig. 2: eine schematische Darstellung eines erfindungsgemäßen Glasbiegevor- gangs unter Ausnutzung von Vakuumsenken;
- Fig. 3: eine schematische Darstellung eines erfindungsgemäßen Glasbiegevor- gangs unter Verwendung eines Presssenkens und
- Fig. 4: eine schematische Darstellung eines thermischen Vorspannens von Strahlenschutzglas.

In Tabelle 1 sind die wichtigsten Daten des Strahlenschutzglases RD 50^{®} zusammengefasst, das von der Schott AG, Mainz, hergestellt und vertrieben wird.

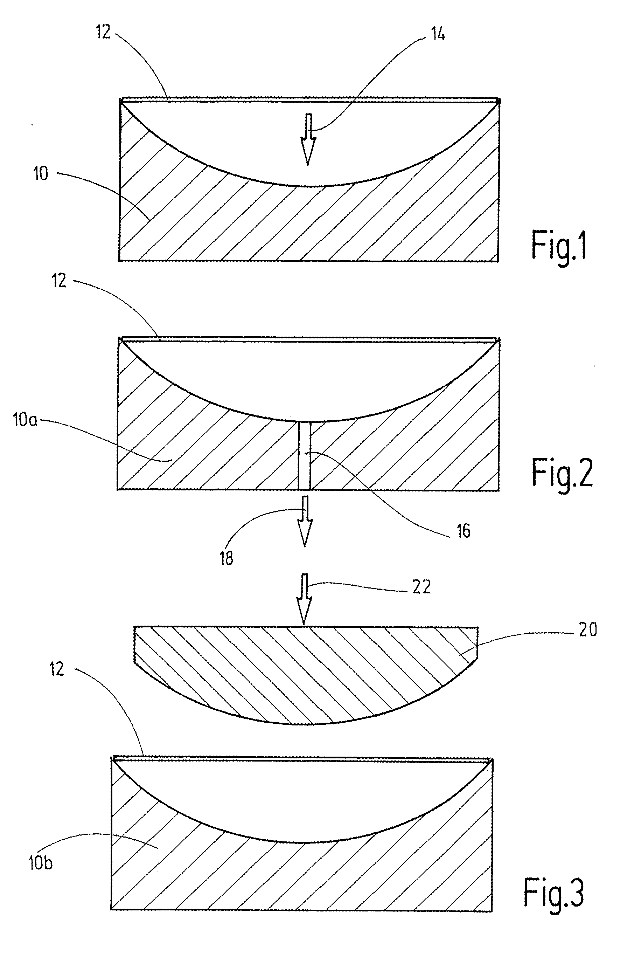

In den Fig. 1 bis 3 sind schematisch verschiedene Möglichkeiten zum Formen bzw. 3-dimensionalen Biegen von Glas dargestellt.

Fig. 1 zeigt das Schwerkraftsenken. Hierbei wird eine Glasplatte 12 auf eine vorgeheizte Form 10 aufgelegt und weiter in geeigneter Weise aufgeheizt. Die Glasplatte 12 legt sich allmählich unter dem Einfluss ihrer Schwerkraft in Richtung des Pfeiles 14 an die Oberfläche der Form 10 an.

Fig. 2 zeigt den gleichen Vorgang mit Vakuumunterstützung, der auch als Vakuumsenken oder Tiefziehen bekannt ist. Eine Form 10a ist hierbei mit einem oder mehreren Saugkanälen 16 versehen, die in Richtung des Pfeiles 18 mit einem Vakuum beaufschlagt werden. Die Glasplatte 12 legt sich hierbei mit zusätzlicher Unterstützung durch das Vakuum an die Innenoberfläche der Form 10a an.

**Tab. 1**

| Zusammensetzung (Gew.-%) | | |
|---|---|---|
| SiO₂ | | 28,0 |
| Al₂O₃ | | 1,0 |
| K₂O | | 1,0 |
| BaO | | 4,0 |
| ZrO₂ | | 1,0 |
| PbO | | 64,5 |
| Sb₂O₃ | | 0,5 |
| Dichte (kg/m³) | | > 5050 |
| Brechungsindex | | 1,79 |
| Transformationstemp. T_{g}(°C) | | 467 |
| α₂₀₋₃₀₀ (ppm) | | 7,4 |

| Viskosität lg η (dPas) | | Temp. (°C) |
|---|---|---|
| Untere Kühltemp. | 14,5 | 444 |
| Obere Kühltemp. | 13,0 | 467 |
| Erweichungstemp. | 7,6 | 603 |
| Formgebungstemp. | 6,0 | 673 |
| Formgebungstemp. | 5,0 | 729 |
| Formgebungstemp. | 4,0 | 800 |
| Schwächungsgleichwert (für Pb in % der Glasdicke): | | |
| für Nenndicke 7,5 mm | | |
| bei 100 kV/0,25 mm Cu | | 30,5 |
| bei 200 kV/1,20 mm Cu | | 28,6 |
| für Nenndicke ≥ 10 mm | | |
| bei 100 kV/0,25 mm Cu | | 30,0 |
| bei 200 kV/1,20 mm Cu | | 28,9 |

In Fig. 3 ist das Pressformen einer Glasplatte 12 schematisch dargestellt. Die Glasplatte 12 wird wiederum auf eine vorgeheizte Form 10b aufgelegt und vorzugsweise in einem Ofen weiter aufgeheizt. Zum eigentlichen Formvorgang fährt ein Stempel 20 in Richtung des Pfeiles 22 nach unten, wodurch die Glasplatte 12 mit Unterstützung des Stempels 20 in die Form 10b gedrückt wird. Der Stempel 20 weist hierbei eine deutlich geringere Temperatur als die Glasplatte 12 und als die Form 12b auf. Auf diese Weise wird einem Kleben entgegengewirkt. Zusätzlich ist die Oberfläche des Stempels mit einem geeigneten Trennmittel, zum Beispiel mit einem Glasseidegewebe bespannt. Hierdurch wird einer Klebeneigung weiter entgegengewirkt.

Das erfindungsgemäße Verfahren zum Biegen von Strahlenschutzglas wurde am Glas RD 50^{®} nach allen drei Biegeverfahren erprobt.

Die Form 10 bzw. 10a bzw. 10b bestand in allen Fällen aus dem martensitischen Stahl 1.4122. Dieser hat nach Herstellerangaben (ThyssenKrupp Materials Schweiz) eine chemische Zusammensetzung von 0,33 bis 0,45 Gew.-% C, 15,5 bis 17,5 Gew.-% Cr, 0,8 bis 1,3 Gew.-% Mo und 0 bis 1,0 Gew.-% Ni.

Die Formen wurden durch Schleifen oder Drehen vorgearbeitet und die Oberfläche schließlich feinstgedreht bzw. geschliffen.

Die Wärmebehandlung durch Glühen, Härten und Anlassen erfolgte nach Herstellerangabe.

Es wurden Proben von 500 x 800 mm und einer Dicke von 6 mm aus dem Glas RD 50^{®} hergestellt. Die Herstellung dieses Glases erfolgt in einem gasbetriebenen Schmelzofen, in dem alle zur Glasherstellung benötigten Komponenten in einem Tonhafen gegeben und unter großer Hitze verschmolzen werden. Die Glasschmelze wird dann zwischen zwei Stahlwalzen zu Glasplatten ausgewalzt und in einem Kühlofen getempert. Durch diesen Prozess werden die Oberflächen beschädigt, so dass eine Durchsicht nicht möglich ist. Anschließend erfolgt eine beidseitige Oberflächenbearbeitung durch Schleifen mit diamantbesetzten Werkzeugen und ein Polieren mit Hilfe von Polierfilzen und Ceroxid, um eine transparente Scheibe herzustellen.

Aus derartigen Glasplatten wurden Proben der Größe von 500 x 800 mm mit einer Dicke von 6 mm zugeschnitten.

### Beispiel 1

Die Form 10 wurde zunächst mit einem Trennmittel behandelt, beispielsweise mit Graphitpulver, und anschließend in einem Ofen zunächst auf 350 bis 400°C vorgeheizt. Anschließend wurde eine kalte Glasplatte aufgelegt. Dann erfolgte eine weitere Aufheizung im Ofen auf 400°C über einen Zeitraum von 60 Minuten und schließlich eine Aufheizung auf etwa 480°C über einen Zeitraum von 30 Minuten. Dabei erfolgte ein Schwerkraftsenken, wie in Fig. 1 dargestellt. Anschließend erfolgte die Abkühlung in der Form 10 mit folgendem Temperaturprogramm: Abkühlung auf 400°C über 60 Minuten, weitere Abkühlung auf 300°C über 70 Minuten, weitere Abkühlung auf 200°C über 60 Minuten, weitere Abkühlung auf 150°C über 20 Minuten, schließlich Abkühlung auf 70°C über 30 Minuten.

Anschließend wurde der geformte Glaskörper entnommen.

### Beispiel 2

Es wurden die gleichen Daten wie beim Beispiel 1 verwendet. Zusätzlich wurde jedoch, wie in Fig. 2 schematisch dargestellt, mit Vakuumunterstützung gearbeitet. Die Form 10a wurde mit einem Unterdruck von etwa 70 kPa beaufschlagt.

### Beispiel 3

Wie bei den Beispielen 1 und 2 wurde eine Glasplatte von 500 x 800 mm x Dicke von 6 mm aus dem Strahlenschutzglas RD 50^{®} verwendet. Die Form 10b wurde in der gleichen Weise wie vorstehend beschrieben hergestellt und vorbehandelt durch Aufbringen eines Trennmittels (Graphitpulver). Es wurde nunmehr ein Doppelpressverfahren gemäß Fig. 3 angewendet.

Hierzu wurde zunächst die Form im Ofen auf etwa 350 bis 400°C vorgeheizt, die kalte Glasplatte aufgelegt und dann nochmals im Ofen auf etwa 400 bis 450°C kurz erwärmt. Anschließend wurde die Form 10b mit der aufliegenden Glasplatte 12 aus dem Ofen ausgefahren und ein Stempel 20 bestehend aus einer Aluminiumlegierung und bespannt mit einem Glasseidegewebe durch einen Pneumatikzylinder allmählich bis auf einen maximalen Pressdruck von etwa 6 bar von oben angefahren, um die Glasplatte 12 gegen die Innenoberfläche der Form 10b zu pressen. Der Pressvorgang dauerte etwa 4 bis 5 Sekunden. Anschließend wurde der Stempel sofort wieder nach oben weg gefahren und die Form 10b mit dem aufliegenden Presskörper wieder in den Ofen gefahren und ab 400°C wieder mit dem gleichen Programm wie bei den Beispielen 1 und 2 bis auf 70°C abgekühlt, also zunächst Halten über 60 Minuten bei 400°C, dann Abkühlen auf 300°C über 70 Minuten usw.

In allen drei Fällen wurde die Glasplatte um einen Betrag von ca. 200 mm in der Mitte nach unten verformt. Es handelte sich hierbei um eine 3-dimensionale Verformung.

In allen drei Fällen ergaben sich gute Toleranzen und Oberflächenqualitäten der hergestellten Formkörper.

Eine Verformung bis auf eine Halbkugelform oder eine entsprechend geformte Rinne ist möglich.

Durch Schwerkraftsenken hergestellte Glasgeometrien gemäß Beispiel 1 wurden anschließend durch thermisches Vorspannen weiter bearbeitet.

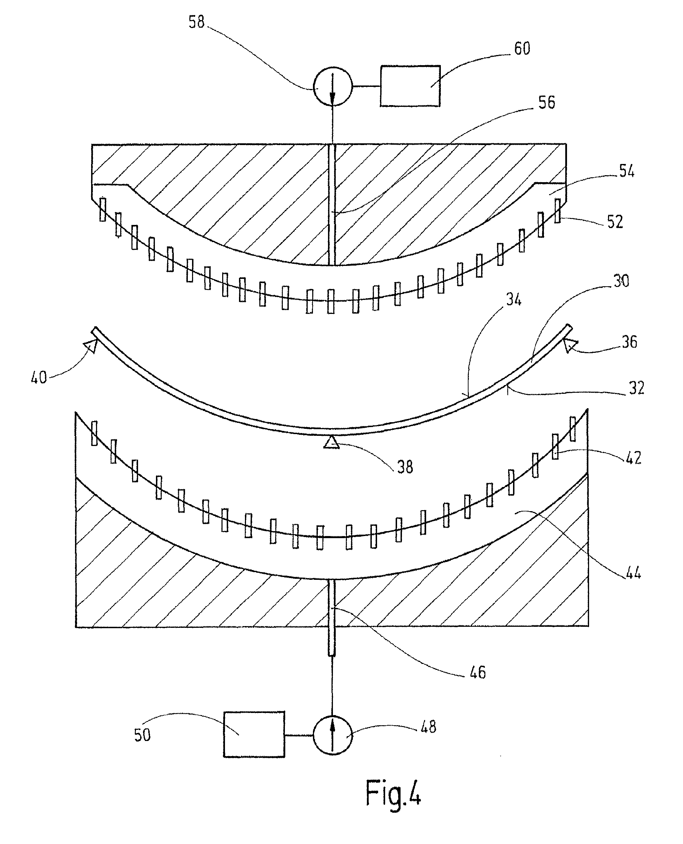

Beim thermischen Vorspannen wird gemäß Fig. 4 der Glaskörper 30 in geeigneter Weise auf ein Gestell gelegt, auf dem er in seinem Randbereich und gegebenenfalls zusätzlich in seinem mittleren Bereich an Auflagepunkten 36, 38, 40 unterstützt wird. Der Glaskörper 30 wird dann in einen vorgeheizten Ofen von ca. 550°C eingefahren und über einen längeren Zeitraum von ca. 15 Minuten auf ca. 450°C aufgeheizt. Anschließend wird der Glaskörper 30 aus dem Ofen ausgefahren und sowohl an seiner Unterseite 32 als auch an seiner Oberseite über eine Mehrzahl von Düsen 42 bzw. 52 angeblasen. Die Luft wird über ein Gebläse 48, das über einen Filter 50 ansaugt, über einen Kanal 46 in einen Verteilerraum 44 zugeführt. Der Verteilerraum 44 weist an seiner dem Glaskörper 30 zugewandten Oberseite eine Vielzahl von Düsen 42 auf, die in gleichmäßigen Abständen zueinander angeordnet sind und die gesamte Oberfläche bedecken.

In entsprechender Weise ist oberhalb des Glaskörpers 30 ein Verteilerraum 54 vorgesehen, dessen Außenoberfläche annähernd der Form des Glaskörpers 30 nachgebildet ist und an dem sich eine Vielzahl von Düsen 52 befinden. Wiederum wird über ein Gebläse 58 und einen Filter 60 Luft von außen angesaugt und über einen Kanal 56 in den Verteilerraum 54 geführt. Der Ausströmdruck liegt bei etwa 15 Millibar.

### Beispiel 4

Eine Glasplatte aus dem Strahlenschutzglas RD 50^{®} der Größe 500 x 800 mm mit einer Dicke von 6 mm wurde zunächst gemäß Beispiel 1 gebogen und dann auf ein Gestell aufgelegt und in ihrem Randbereich an insgesamt 12-16 Auflagepunkten sowie zusätzlich im mittleren Bereich durch 4-8 Auflagepunkte abgestützt. Nach einem Vorheizen im Ofen von 550°C über etwa 15 Minuten wurde der Glaskörper 30 aus dem Ofen ausgefahren und von beiden Seiten mit Blasluft angeströmt, bis sich die Temperatur an seiner Oberfläche auf etwa 100°C abgesenkt hatte. Anschließend wurde der Kühlprozess beendet und es erfolgte eine natürliche Abkühlung auf Raumtemperatur.

Ein Abschrecktest (TWB-Test nach DIN IEC 60747) wurde an gemäß Beispiel 1 geformten Glaskörpern (nicht thermisch vorgespannt) und gemäß Beispiel 4 zusätzlich thermisch vorgespannten Glaskörpern durchgeführt. Die Glaskörper werden auf 70 °C bis 160 °C aufgeheizt und anschließend mit kaltem Wasser von ca. 15 °C abgebraust.

Bei nicht vorgespannten Glaskörpern trat schon bei Aufheizung auf 70°C und Abbrausen mit kaltem Wasser Bruch ein.

Vorgespannte Glaskörper wurden dagegen auf bis zu 160°C aufgeheizt, ohne dass bei Abbrausen mit kaltem Wasser ein Bruch eintrat. Dann wurde der Test abgebrochen.

Die Ergebnisse eines Kugelfalltestes (IEC 60601, alt DIN 4646) für vorgespannte und nicht vorgespannte Glaskörper sind in Tabelle 2 zusammengefasst.

**Tabelle 2**

| **Kugelfall-Test** | | | | |
|---|---|---|---|---|
| Fallhöhe (72 Gramm) | 1,5 m | 1,6 m | 1,7 m | 1,8 m |
| Energie in Joule | 1,059 | 1,130 | 1,201 | 1,271 |
| Ohne Vorspannung | OK | OK | OK | Bruch |
| Mit Vorspannung | OK | OK | OK | OK |
| | | | | |

| Fallhöhe (226 Gramm) | 1,5 m | 1,6 m | 1,7 m | 1,8 m |
|---|---|---|---|---|
| Energie in Joule | 3,326 | 3,547 | 3,769 | 3,991 |
| Ohne Vorspannung | Bruch | --- | --- | --- |
| Mit Vorspannung | OK | OK | OK | OK |

## Patentansprüche

1. Verfahren zum Biegen von Strahlenschutzglas, mit den folgenden Schritten:
(a) Bereitstellen einer Form (10, 10a, 10b);
(b) Bereitstellen einer Glasplatte (12) aus einem Strahlenschutzglas;
(c) Vorheizen der Form auf eine Temperatur von 300 bis 400°C;
(d) Auflegen der Glasplatte (12) auf die Form (10, 10a, 10b);
(e) gemeinsames Aufheizen der Glasplatte (12) und der Form (10, 10a, 10b) auf eine Temperatur von 370 bis 430°C;
(f) Aufheizen auf eine Temperatur von 400°C bis 500°C, vorzugsweise auf eine Temperatur von 440°C bis 500°C, wobei die Schritte (e) und (f) zusammen mindestens 30 Minuten, vorzugsweise mindestens 60 Minuten dauern;
(g) Formen der Glasplatte (12) und
(h) Abkühlen des geformten Glases mittels eines Kühlprogrammes über einen Zeitraum von mindestens 60 Minuten, vorzugsweise über mindestens 120 Minuten.

2. Verfahren nach einem der vorhergehenden Ansprüche, bei dem der Formvorgang durch Anlegen eines Vakuums unterstützt wird.

3. Verfahren nach Anspruch 1 oder 2, bei dem die Glasplatte (12) durch einen Stempel (20), der vorzugsweise aus einer Aluminiumlegierung oder einer Magnesiumlegierung besteht, in die Form (10b) gepresst wird.

4. Verfahren nach Anspruch 3, bei dem der Stempel (20) an seiner Oberfläche eine Trennschicht aufweist, die vorzugsweise aus einem Glasseidegewebe besteht.

5. Verfahren nach Anspruch 3 oder 4, bei dem der Stempel (20) auf eine Temperatur vorgeheizt wird, die mindestens 100 K unterhalb der Vorheiztemperatur der Form liegt, vorzugsweise 120 bis 180°C beträgt, weiter bevorzugt, 140 bis 160°C beträgt.

6. Verfahren nach einem der Ansprüche 3 bis 5, bei dem der Anpressdruck allmählich aufgebaut wird, bis ein Maximaldruck von 15 bar, vorzugsweise von 10 bar, weiter bevorzugt von 8 bar erreicht ist.

7. Verfahren nach einem der Ansprüche 3 bis 6, bei dem die Presszeit 2 bis 30 Sekunden, vorzugsweise 3 bis 10 Sekunden, besonders bevorzugt 4 bis 6 Sekunden beträgt.

8. Verfahren nach einem der Ansprüche 3 bis 7, bei dem die Form (10b) mit der aufgelegten Glasplatte (12) zum Pressen aus dem Ofen herausgefahren wird und anschließend zur Durchführung des Kühlprogrammes wieder in den Ofen gefahren wird.

9. Verfahren nach einem der Ansprüche der Ansprüche 3 bis 8, bei dem das geformte Glas nach dem Pressvorgang mittels eines Kühlprogrammes über einen Zeitraum von mindestens 60 Minuten, vorzugsweise über mindestens 120 Minuten abgekühlt wird.

10. Verfahren nach Anspruch 9, bei dem das geformte Glass von einer Temperatur von unterhalb der unteren Kühltemperatur aus abgekühlt wird, vorzugsweise beginnend mit einer Temperatur, die 30 bis 100 K unterhalb der unteren Kühltemperatur liegt, vorzugsweise beginnend bei 380 bis 420°C.

11. Verfahren nach einem der vorhergehenden Ansprüche, bei dem eine Form (10, 10a, 10b) verwendet wird, die aus einem vergüteten martensitischen Stahl besteht, vorzugsweise mit einem C-Gehalt von 0,2 bis 0,6 Gew.-%, weiter bevorzugt mit einem C-Gehalt von 0,3 bis 0,5 Gew.-%, weiter bevorzugt aus einem Stahl mit einem Chromgehalt von 14 bis 19 Gew.-%, einem Molybdängehalt von 0,5 bis 2 Gew.-% und einem Nickelgehalt von 0 bis 2 Gew.-% besteht, besonders bevorzugt aus dem Stahl Nr. 1.4122 besteht.

12. Verfahren nach einem der vorhergehenden Ansprüche, bei dem die Oberfläche der Form (10, 10a, 10b) mit einem Trennmittel beschichtet wird, vorzugsweise mit Graphitpulver oder mit Bornitridpulver.

13. Verfahren zum thermischen Vorspannen eines Glaskörpers (30) aus einem Strahlenschutzglas, insbesondere nach einem Biegen gemäß einem der Ansprüche 1 bis 12, mit den folgenden Schritten:
- Abstützen des Glaskörpers (30) zumindest an seinem Außenumfang an einer Reihe von Auflagepunkten (36, 38, 40);
- Einführen des Glaskörpers in einen Ofen, der auf eine Temperatur von 500 bis 600°C , vorzugsweise auf 530°C bis 570°C vorgeheizt ist;
- Aufheizen des Glaskörpers auf 400°C bis 500°C, vorzugsweise auf 430°C bis 470°C;
- Entnehmen des Glaskörpers (30) aus dem Ofen und Anblasen des Glaskörpers auf beiden Seiten mit einem kalten Fluid aus einer Mehrzahl von Düsen (42, 52), bis sich der Glaskörper (30) auf eine Oberflächentemperatur von höchstens 150°C, vorzugsweise auf höchstens 120°C, besonders bevorzugt auf höchstens 100°C abgekühlt hat.

14. Verfahren nach einem der vorhergehenden Ansprüche, bei dem das Strahlenschutzglas eine Dichte von mindestens 4000 kg/m³, vorzugsweise von mindestens 4900 kg/m³ aufweist, weiter bevorzugt ein Schwerflintglas ist, das vorzugsweise einen Schwermetalloxidgehalt von mindestens 50 Gew.-% aufweist, besonders bevorzugt einen Bleioxidgehalt von mindestens 60 Gew.-% aufweist.

15. Gebogener Körper oder thermisch vorgespannter Körper, insbesondere in gebogener Form, bestehend aus einem Strahlenschutzglas, hergestellt nach einem Verfahren gemäß einem der vorhergehenden Ansprüche.
